# EUROPEAN PATENT SPECIFICATION

(11) **EP 2 483 771 B1**
(45) Date of publication and mention of the grant of the patent: **29.08.2018**
(21) Application number: 10821015.4
(22) Date of filing: 13.09.2010
(51) Int. Cl.: G06Q 30/06, G06F 7/00, G06Q 20/12, G06Q 20/22, G06Q 20/32, G06Q 30/02, G06Q 20/10, H04W 4/00, H04B 5/00, G06Q 10/10, H04W 4/20

(54) **NEAR FIELD COMMUNICATION AND NETWORK DATA/PRODUCT TRANSFER**
NAHFELDKOMMUNIKATION UND -DATEN-/PRODUKTÜBERTRAGUNG
COMMUNICATION EN CHAMP PROCHE ET TRANSFERT DE DONNEES/DE PRODUITS EN RESEAU

(30) Priority: 30.09.2009 US 570454
(43) Date of publication of application: 08.08.2012
(73) Proprietor: PayPal, Inc., Palo Alto, CA 94303 (US)
(72) Inventor: TAVEAU, Sebastien, Redwood City California 94061 (US); STONE, Carl, Campbell California 95008 (US); NAAMAN, Nadav, Palo Alto California 94303 (US); NAHARI, Hadi, Mountain View California 94040 (US)
(74) Representative: Hanna Moore + Curley
(86) International application number: PCT/US2010/048653
(87) International publication number: WO 2011/041092

(56) References cited:
- WO-A1-2008/007175
- US-A1- 2007 171 880
- US-A1- 2007 188 323
- US-A1- 2007 213 045
- US-A1- 2007 250 447
- US-A1- 2008 195 735
- US-A1- 2008 212 779
- LEHDONVIRTA ET AL.: 'UbiPay: Minimizing Transaction Costs with Smart Mobile Payments', [Online] 04 September 2009, page 5, 6, XP008156382 Retrieved from the Internet: <URL:http://www.hüt.fi/-vlehdonv/documents/ Lehdonvirta 2009 UbiPay_Mobility.pdf> [retrieved on 2010-11-11]

## Description

### BACKGROUND

### Field of the Invention

The present invention generally relates to wireless communications and more particularly to wireless transferring of data between devices.

### Related Art

With the ever-increasing use of mobile phones and devices, users desire such devices to have more and more capability other than conventional phone use. One area that is evolving is transfer of data through the phone. A recent development, called Bump™ developed by Bump Technologies, Inc., uses the near simultaneous movement of two devices in close proximity to effect a transfer of contact information. When a transfer is desired between a first device and a second device, both devices are shaken or moved, such that the movement is detected by each device, e.g., with an accelerometer within the device. Once detected, the device transmits location information, such as by a GPS unit or other location service unit within the device, to a server. The server processes the location information and determines whether another device at approximately the same location transmitted location information at approximately the same time. This may be accomplished by comparing time stamps from devices within a certain area. If the server detects more than two devices within an acceptable time period and within an acceptable distance from each other, the devices may be sent a message asking them to be shaken or moved again or ask for a confirmation of transfer from two parties while sending an error or "unable to complete transfer" message to all other parties. This situation may arise in a crowded conference room where multiple users are trying to initiate a transfer with different parties.

Once two devices have been identified, each device is notified that a connection has been established and is asked whether it wants to exchange information with the other device (or more accurately, the user of the other device). If the user confirms the exchange, contact information is transmitted, creating a new contact or revising an old contact on the device. Users may define what contact information to exchange, such as email address, mailing address, and/or phone number.

As a result, users having mobile devices can exchange contact information without having to manually enter the information into the device. However, Bump™ is currently only used for exchanging user contact information. There may be different situations where Bump™ can be used, either alone or with other technologies, to improve the user experience with mobile devices or phones.

WO2008007175 discloses a method of transferring data from a hand held electronic device to a target electronic device. The method includes establishing a wireless interface between the hand held electronic device and the target electronic device. A transfer motion that includes rotation of the hand held electronic device is detected. Upon detection of the transfer motion, the data is transmitted from the hand held electronic device to the target electronic device over the wireless interface. The wireless interface may be initiated and configured using a localized communication link. US2007188323 discloses a method of motion detection notification, in which a motion detector in a portable device detects a motion of the device and issues an activation signal when the detected motion has a magnitude greater than a preset threshold. A detection notification component in the portable device then receives the activation signal and initiates communication with an additional device that detects a corresponding motion to the motion of the portable device and is configured for communication with the portable device.

US2008195735 discloses methods of controlling the transfer of data between devices in which the manner of control is determined by a movement experienced by at least one of the devices. The method involves detecting a triggering movement and determining a characteristic of this movement. The transfer of data is then controlled based on the characteristic which has been identified. US2007213045 discloses electronic equipment, such as a mobile phone, PDA or other device, which is operative to transmit information to another electronic equipment when the two are paired caused by moving them, e.g., shaking, at substantially the same frequency and amplitude. The transferred information may be contacts or other information.

### SUMMARY

The present application provides methods in accordance with the claims which follow.

These and other features and advantages of the present invention will be more readily apparent from the detailed description of the embodiments set forth below taken in conjunction with the accompanying drawings.

### BRIEF DESCRIPTION OF THE FIGURES

Fig. 1 is a block diagram of a system for enabling transactions using a shake and transfer process according to one embodiment;
Fig. 2 shows one embodiment for activating an application according to one embodiment;
Fig. 3 shows one embodiment for transferring money by NFC according to one embodiment;
Fig. 4 is a flowchart showing a process for transferring an item according to one embodiment;
Fig. 5 is a flowchart showing a process for selecting information to transfer according to one embodiment;
Fig. 6 is a flowchart showing a process for making a transaction with an unattended merchant according to one embodiment;
Fig. 7 shows one example of a system that can be used for the process of Fig. 6; and
Fig. 8 is a block diagram of one embodiment of a system that can be used to implement one or more components of the systems described herein.

Exemplary embodiments and their advantages are best understood by referring to the detailed description that follows. It should be appreciated that like reference numerals are used to identify like elements illustrated in one or more of the figures, wherein showings therein are for purposes of illustrating exemplary embodiments and not for purposes of limiting the same.

### DETAILED DESCRIPTION

Embodiments of the present disclosure enable users to leverage Bump™-type communications to both improve the user experience and increase mobile device uses. As used herein, the term "mobile device" is a broad term and may include, but is not limited to a cell phone, PDA, key fob, smartcard, laptop, PC, or similar type of augmented object or device.

According to one embodiment, which is not part of the claimed invention, near field communication (NFC) is used to initiate communication between two mobile devices, and large amounts of data are then transferred between the two devices using a sequence of device shaking to establish a communication link and transferring the data through a network/server via the Internet or a "cloud" (also known as cloud computing), referred to herein as Bump™, Bump™-type communications, or more generally as "shake and transfer."

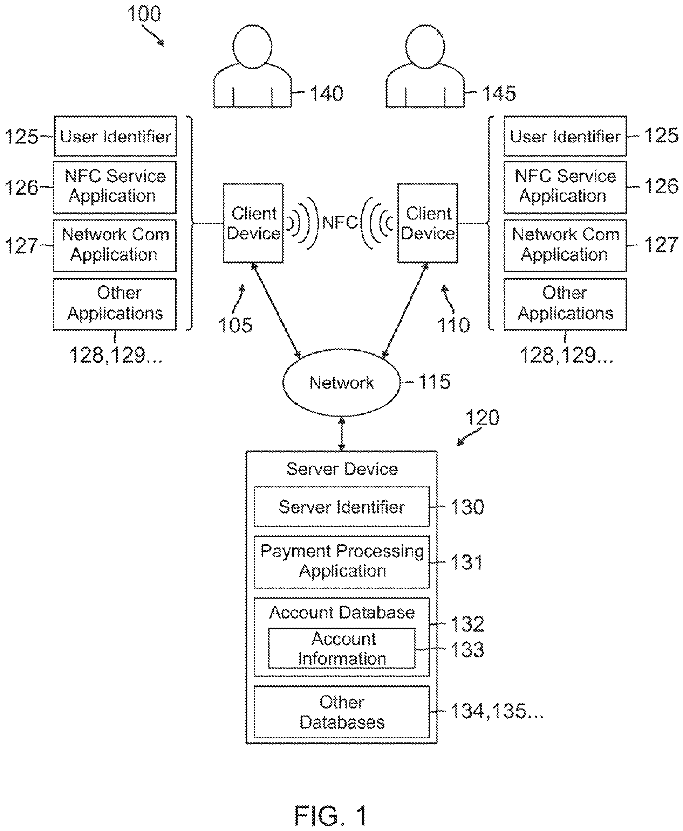

NFC can also be used, after initiating the communication, to purchase a product or digital good. Because such a transaction involves money, security may be a bigger issue with users. NFC can provide additional security that a shake and transfer communication does not. Fig. 1 shows a system 100 for enabling a financial transaction between mobile devices using NFC in a network environment in accordance with one embodiment. Note that system 100 may also be generalized for data transfer in a shake and transfer process, where data is transferred between the two client devices via a server device, in a cloud, for example, managed by a company, such as Bump Technologies. System 100 may include a first NFC enabled mobile device 105 and a second NFC enabled mobile device 110, a network 115 to enable connectivity between entities/elements and the flow of information, and a third party payment provider system 120 (PPS) for payment processing (verification, authorization, and confirmation) of the financial transaction between mobile devices 105, 110, as well as the debiting and crediting of appropriate user accounts associated with each user 140 and 145. Note that one of the mobile devices may be an unattended merchant, such as a vending machine or kiosk.

Each of mobile devices 105, 110 are NFC-enabled and may include a user identifier 125, NFC service application 126, network communication application 127, and other applications 128, 129, including a payment provider application, a browser application, a toolbar application, as may be necessary to enable NFC communication between mobile devices 105, 100 and payment provider system 120 (such as PayPal, Inc.) via network 115.

Broadly, NFC service application 126 provides those features that generally enable NFC communication between NFC-enabled devices, and payment provider application provides those features that generally enable mobile device 105, 110 to communicate with payment provider system 120. However, both applications may also enable the user to activate various multimedia features, as well as enable financial transactions via "send money," "request money," "send contact information," "acquire contact information," etc., through icon linked applications.

In one embodiment, network 115 may be implemented as a single network or a combination of multiple networks. For example, in various embodiments, the network may include the Internet and/one or more intranets, landline networks, wireless networks, and/or other appropriate types of communication networks. In another example, the network may comprise a wireless telecommunications network (e.g., cellular phone network) adapted to communicate with other communication networks, such as the Internet.

Payment provider system 120 may include a server identifier 130, a payment processing application 131, and an account database 132 having account information 133 and other databases 134, 135, as may be required to enable payment processing between mobile devices 105, 110. In one embodiment, a financial transaction between mobile devices 105, 110 may include the transfer or sending of money from first mobile device 105 (sender) to second mobile device 110 (recipient). Pre-conditions for the successful completion of the transfer of money between mobile devices 105, 110 may include the assumption that first mobile device 105 and second mobile device 110 are NFC enabled, a payment provider service application 126, NFC service application, or bundled application is present on the sender's mobile device 105, and the sender has a previously established payment provider account 132.

The application(s) setup may be facilitated over-the-air (OTA), wherein depending on implementation, an OTA application/software download may be initiated upon an action, such as a call to the payment provider system 120 or other dialable service, or can be performed automatically when visiting a service site. Alternatively, the application(s) setup may be facilitated by using another NFC chip, wherein for example, a pre-loaded NFC card issued by the payment provider system 120 or other entity may be pre-loaded with a basic application, account information, URL, etc., such that when touched to an NFC enabled mobile device, the information is transferred to the mobile device to permit access to an OTA site where the payment provider application/software download can be initiated.

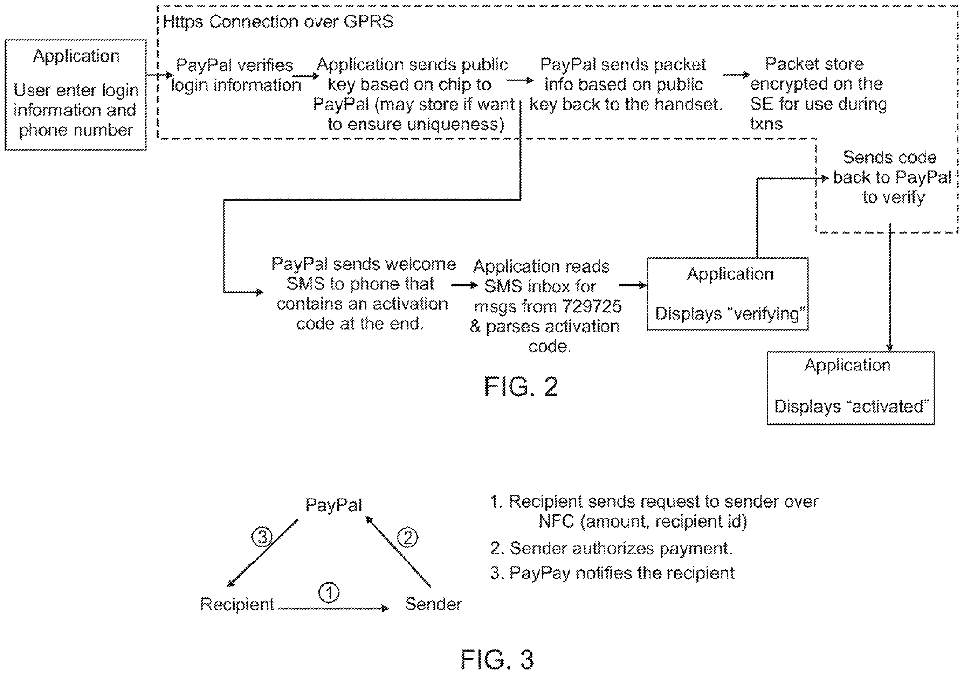

In one embodiment, an initial payment provider application activation process may be required to be completed prior to utilizing application(s) 126-129 for the first time. Fig. 2 shows one embodiment, in which application(s) activation may begin with the user entering login information such as phone number, pin number, email address and/or password, in mobile device 105, 110. The application forwards the information and a public key (unique identifier) 125 based on the NFC mobile device's chip to payment provider system 120. In one embodiment, network connectivity for the communication of voice and/data between mobile device 105, 110 and payment provider system 120 may be facilitated by an HTTPS (Hyper Text Transfer Protocol Secure) connection over a general packet radio service (GPRS). GPRS is a packet based wireless communication service that offers continuous connection to the Internet or other network 115 for mobile phone and computer users. GPRS is based on GSM (Global System for Mobile Communication) and complements existing services such as circuit switched cellular phone connections and the Short Message Service (SMS), i.e., text message. Persons of skill in the art will understand similar protocols and wireless services may be utilized within the scope of the disclosure to enable wireless connectivity and communication between the mobile devices and the payment service provider.

In response to receiving the user's information and unique identifier, service provider system 120 sends packet information to mobile device 105, 110. The packet information from payment provider system 120 to the mobile device may include data relating to country, currency, language, activation code and/or security keys as well as individual credentials. A corresponding code generated by the application is then communicated back to payment provider system 120 from mobile device 105, 110. Such a back-and-forth communication or "handshake" between mobile device 105, 110 and payment provider system 120 allows for user and/or system verification, authorization, and compatibility check to complete the application(s) activation process. Typically, user 140, 145 is then notified that the application is activated. Packet information previously sent from payment provider system 120 to mobile device 105, 110 is stored on the chipset for future use when activating application(s) 126-129. Payment provider system 120 may further communicate a short welcome text message to mobile device 105, 110.

After the initial setup and activation of the application(s) is complete, subsequent activation of one or more of the application(s) may occur upon activation of the mobile device. In one embodiment, mobile device 105 is a cell phone in which activation may occur upon opening mobile device 105. In another case, sender 140 may be required to touch a feature (icon, pushbutton, etc.) on mobile device 105 to access and activate one or more of the application(s). In still another case, activation of one or more of the applications may occur upon "tapping" or bringing mobile device 105 in close proximity with another NFC enabled device.

Upon activation of mobile device 105, sender 140 may be presented with menu options for enabling various functions including those associated with multimedia features, e.g., music, video, games, etc., user contact information, and those relating to financial transactions such as sending or receiving money. Sender 140 would then choose the desired function from the menu options, for example, "send money" in the case of a proposed money transfer between mobile devices 105, 110. In one embodiment, sender 140 would be asked to enter, in no particular order, funding particulars including the funding source e.g., MC, VISA, AMEX, Citibank, PPS account, or other funding source, the amount of money to be sent, and login information (e.g., PIN, passcode, pattern, or password). In the absence of an affirmative choice of one or more presented funding particulars, preset default settings may be enabled. In addition, sender 140 will typically have the opportunity to review and edit the payment choices prior to communicating the payment request to payment provider system 120.

Upon activation of mobile device 110, recipient 145, like sender 140, may be presented with menu options for enabling various functions including those associated with multimedia features, e.g., music, video, games, etc., user contact information, and those relating to financial transactions such as sending or receiving money. Recipient 140 of the intended money transfer would then choose the desired function from, for example, "receive money" or "ready, wait" (a default setting having implications of what is being shared) in the case of the above described proposed money transfer between mobile devices 105, 110. In one embodiment, by choosing the "receive money" function, the recipient implicitly/explicitly agrees to provide certain designated information such as email address, phone number, account information, etc., to facilitate funding by payment provider system 120 to the designated recipient account, digital wallet (phone), or email address where funds may be deposited or acquired.

Sender 140 then touches or "taps" NFC-enabled mobile device 110 of recipient 145 to enable the transfer of the designated recipient information from the recipient's mobile device 110 to the sender's mobile device 105 via NFC.

Upon completing payment processing the payment provider system may communicate a SMS notification, i.e., successful transfer of funds, successful deposit of funds, amount of transfer or deposit, or some other related message informing sender 140 and/or recipient 145 of the payment processing results such as an email, phone call, or a multimedia messaging service (MMS) message. Sender 140 and/or recipient notifications may further include an audio, visual, and/or tactile indication such as a vibration in the respective device.

In summary, in one embodiment which is not part of the claimed invention contact information transfer is communicated directly via NFC from recipient's mobile device 145 to sender's mobile device 140. Payment review is done via NFC from sender's mobile device 140 to recipient's mobile device 145 showing the conditions of the financial transaction. The payment request is communicated OTA to payment provider system 120 in real-time, while notifications and confirmations are communicated to sender's mobile device 140 and the recipient's mobile device via SMS, MMS, and/or other form of indicator.

Referring back to Fig. 1, according to one embodiment, a financial transaction may comprise a two step or "two-tap" process between NFC enabled mobile devices 105 and 110 in which a first "tap" between the devices communicates contact information, e.g., cell phone number or email address, and a second "tap" between the devices communicates the payment request to payment provider system 120. As discussed above, sender 140 may be given the opportunity to review and edit certain of the details of the transaction, e.g., payment amount, funding account, after affecting the first tap and before effecting the second.

In the two-tap embodiment, a money transfer or financial transaction between respective NFC enabled devices 105 and 110 of sender 140 and recipient 145 is facilitated by third party service provider 120 and comprises: 1) sender 140 entering a payment request (e.g., amount, funding instrument, and the like) into his or her NFC device 140, 2) the sender then gathering recipient information via a first tap between the respective NFC devices, 3) the sender then sending the request to third party provider 120, which is effected by a second tap between the two devices, and 4) service provider 120 sending confirmation of the transaction to the sender and recipient. NFC devices 105 and 110 may connect, for example, to the Internet to effect the money transaction, and additional information can be transferred along with payment, such as user ID, avatars, icons, and the like. Once the transaction is in progress or completed, the users may be notified, such as by means of an audio and/or visual indication and/or a vibration of the respective NFC devices.

In an alternate embodiment to the two-tap, a financial transaction may include a "one-tap" process between NFC enabled mobile devices 105 and 110 in which a single "tap" between the mobile devices communicates contact information (e.g., cell phone number or email address), and communicates the payment request to the payment provider system if the payment amount was previously entered. In this one step or "one-tap" process, a "money transfer" or "financial transaction" between the two respective NFC enabled devices of sender 140 and recipient 145 is effected by a third party service provider and comprises: 1) sender 140 entering a payment request (amount, funding instrument, and the like) into the sender's NFC device 105, 2) the sender then gathering recipient information and sending the request simultaneously to third party provider 120 via a single "tap" of the sender's NFC device 105 to the recipient's NFC device 110, and 3) the third party service provider then sending a transaction confirmation to both the sender and recipient. Devices 105 and 110 may both connect, for example, to the Internet to effect the transaction or communicate other information as previously discussed.

Fig. 3 shows one embodiment of transferring money by NFC, which includes 1) the recipient sending a request for money to the sender via NFC, 2) the sender authorizing payment with the payment provider system via OTA, and 3) the payment provider system notifying the recipient of the transfer of funds. Thus, by communicating information via NFC, the sender only needs to enter a PIN to approve payment with the payment provider system. Payment can be for goods to be delivered, picked up, or downloaded. Downloadable digital goods, such as music or video, may be communicated to the sender's mobile device along with a money request for the download from the recipient's mobile device via NFC. If the sender agrees to the purchase or sending of money for the download, the payment process would continue as discussed above, and upon completion, the digital goods transferred or downloaded.

One potential issue with downloading digital goods is the size of the download. Very large digital goods, such as a full-length movie, may require a long time to download through an NFC or Bluetooth link or may not be downloadable through NFC. Even if downloadable, the user(s) (purchaser and/or seller) may need to wait an inordinate amount of time waiting for the download.

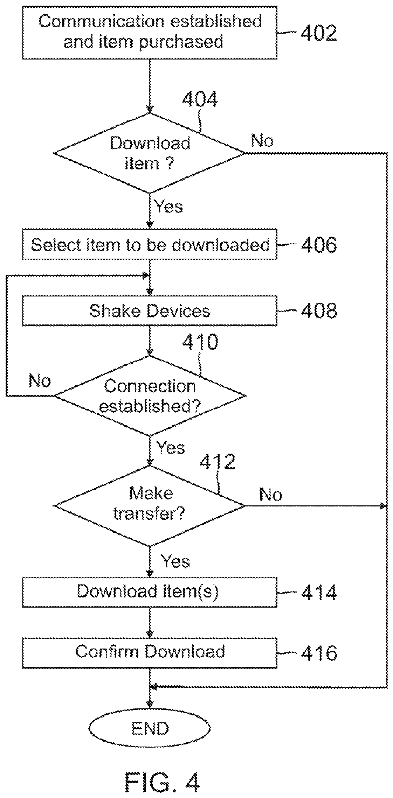

Fig. 4 is a flowchart showing steps to download a purchased item according to one embodiment of the claimed invention. At step 402, communication between the two mobile devices has been initiated and authenticated, and the downloadable item has been purchased using NFC, as discussed above. Next, the parties may be asked whether they wish to make the transfer or download at this time, at step 404. The parties can answer yes or no, such as by tapping or selecting an icon or feature. If either party replies with a negative, the communication can be terminated and a later transfer scheduled. However, if the parties agree to make the transfer now, the seller may be asked to select the item(s) being transferred, at step 406. Selection can be by any suitable means, including selecting the item(s) from a "just sold" list, another type of list, or simply from an icon display. Once selected, the two parties may be asked to shake their devices at step 408. Other movements may also be suitable, such that each device detects the movement to initiate a communication of data to a server. The movement may be random or specific. Note that the two devices must be within a certain proximity of each other, determined by the requirements of the server.

Once shaken, a determination is made, at step 410, as to whether a connection can be established between the two devices. A number of reasons may cause a connection to not be established, including the devices being too far away from each other, the devices not being shaken within a certain time period, too many other devices being shaken in the general area and time, and one or both devices not shaken sufficiently or properly to cause a communication to the server. If no connection is established, for whatever reason, the devices are asked to be shaken again. If a connection is established, such as the server recognizing location information as being within a predetermined distance and the information from both devices was received within a predetermined time period, users of the device may be asked whether they wish to make the transfer or download, at step 412. This step may be omitted or included as another level of security, confirmation, or precaution. Also, only the receiving or transmitting device may be asked. Once the device or devices confirm the download, the selected item or items are downloaded wirelessly, at step 414, from the transmitting device to the receiving device.

Once the download is completed, one or both devices may be sent a message, indicating that download was successful at step 416. If the download was unsuccessful, such as due to a communication loss, the devices may be sent a message asking whether they wish to attempt the transfer again or wait. The process then proceeds based on the response from the device(s). In this manner, large digital goods, such as movies, may be purchased safely and transferred wirelessly to a mobile device. Currently, an NFC range is usually accepted to be 424 kbit/s which is slower than in comparison with Bluetooth (721 kbit/s) or WiFi. Thus, digital goods requiring or having a suggested transfer speed of greater than 424 kbits/s would greatly benefit from this type of transfer.

In one embodiment, where one of the devices is not "mobile," but rather an unattended device, such as a kiosk, the download may be made by the buyer first selecting whether to receive the purchased item(s), shaking the user device and triggering a similar mechanism on the unattended device, confirming the download, and then receiving the download in the user's mobile device through the network. Thus, in this embodiment, only the purchasing party is engaging in the proactive actions and responses discussed above.

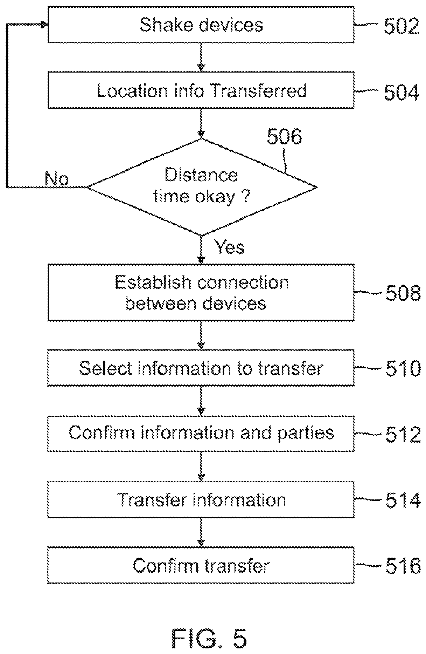

Fig. 5 is a flowchart showing another embodiment of data transfer using a shake and transfer process which is not in accordance with the claimed invention. At step 502, two devices are shaken to initiate a transfer of device data to the network server. When each device detects the appropriate amount or type of shake, the device transmits location information at step 504. The server then determines, at step 506, whether the two devices are located within a predetermined distance from each other and transmitted their location information within a predetermined time period. If not, the devices may be asked to be shaken again. However, if the server determines the two devices are the intended ones for an information transfer, the server establishes a connection between the two devices at step 508 via the network.

Next, at step 510, the device or devices are asked to select the information to be transferred. Note that only one device may be transferring information or both devices may be transferring. Thus, selection, for each device, may include an option of "nothing to transfer" or something equivalent. The user may select from a menu, icons, populate a form, or create a form or page. Information selected to be transferred may include contact information of others (not the user of the device), photos, videos, etc. Once selected, both users may be asked, at step 512, to confirm both the information to be transferred and the party receiving the information. If the transfer is unilateral, only the sending party may be asked; however, in other embodiments, both parties may be asked, even if only one party is transmitting information.

Once the party or parties have confirmed the transfer, the network transfers the selected information or content to the receiving device(s) at step 514. The received content may be placed in a specific folder (such as a "received" folder or photo folder), into the device contacts, or other suitable location. After the transfer is completed, the device is notified that the information has been transferred successfully, at step 516. At this point, the network may terminate the communication between the two devices. Using the process of Fig. 5, a user may selectively choose what content or information to transfer, as opposed to transferring only the user's contact information.

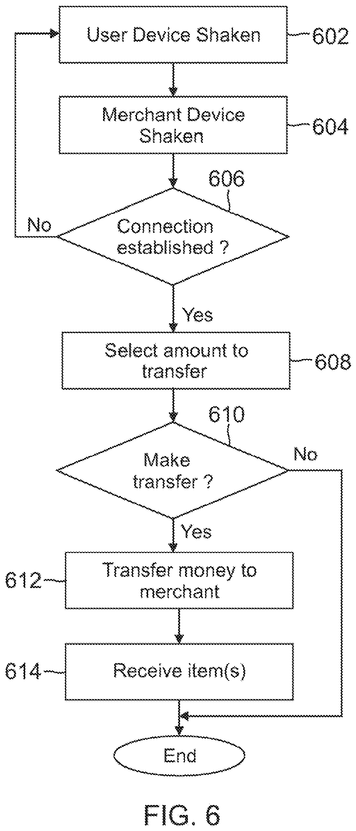

Fig. 6 is a flowchart showing another embodiment which is not part of the claimed invention for using a shake and transfer process to pay for and receive a purchased item from an unattended merchant. When a user or consumer wants to purchase something from an unattended merchant, the user first shakes a user device, such as a mobile phone, which initiates a process that transfers money to a merchant account. The unattended merchant recognizes that a transfer has been made and allows the user to select and receive an item that was purchased. In one embodiment, the user has an account with a payment provider, such as PayPal, Inc. of San Jose, CA. If the user does not have an account, the user first registers for an account, which may include providing information such as a funding source, password, phone number, user name, address, etc.

In one example, the user walks up to a vending machine to purchase a soft drink. Note that any type of unattended merchant, dispensing any type of tangible good or services (ticketing for example), may be suitable. At step 602, the user shakes the user's mobile device when the user is at the vending machine and ready to make the purchase. Shaking the device, as discussed above, causes an accelerometer or other motion-sensing element, to transmit location information to a network, which in this embodiment, may be operated by the payment provider or other suitable entity. Additional information may also be transmitted, such as information about the device and/or user. At around the same time, the user also moves a feature on the vending machine at step 604. Moving the feature causes an accelerometer or other motion-sending element to transmit location information to the network. The feature may be a rotatable dial, a spring biased lever, or other suitable movable feature that allows a motion-sensing element to sense movement of the feature or a pre-recorded and known location which would be matched logically by third party service provider 120 with known location of NFC enabled device 105.

The network, at step 606, determines whether a connection can be established between the user device and the vending machine. This determination may involve determining whether the user device and vending machine are located within a predetermined distance, such as two feet, and transmitted location information within a predetermined time of each other, e.g., 5 seconds. If both of these conditions are not met, resulting in no connection, the process may start again with the device shaking. Note that, in one embodiment, the vending machine does not need to have a feature to be shaken. For example, the network may already have the vending machine's location in its system so that the vending machine does not need to transmit location information. Because the vending machine is essentially stationary (only moving when the machine is moved to a new location), there may not be a strong need for the vending machine to transmit location information. Thus, when a user wishes to make a purchase from the vending machine, the user simply shakes the user's mobile device near the vending machine, and the network uses the transmitted location information from the user device to determine whether the vending machine and user device are in sufficiently close proximity to each other. If so, a connection is established.

Once the connection is established, the user selects an amount, at step 610, to be transferred for the purchase. This may involve the user simply entering in numbers from a keypad or selecting from one of several fixed amounts. When the network knows the amount to be transferred, the user may be asked to confirm the transfer at step 610. This may involve the user simply tapping a yes or confirm button on the user device. In another embodiment, the user account may allow the network to make the transfer without any additional confirmation or authentication if the amount is within parameters set for the account, which may include maximum transaction amount, a maximum number of transactions with a period, and/or a maximum total dollar amount for transactions within a period. Thus, with relatively minor purchases, such as from vending machines, the process for paying for the item may be simpler for the user.

Next, at step 612, the network transfers the selected amount to the merchant associated with the vending machine. For example, the network or payment provider may transfer the selected amount from the user's account with the payment provider to the merchant's account with the payment provider. The transfer may also be between accounts maintained by third parties with which the network or payment provider has agreements to provide such services. The selected amount may alternatively be transferred directly to the vending machine. Either way, the vending machine is aware that a certain amount of money has been paid, i.e., that there is a credit which can be redeemed for an item or items not exceeding the credit amount.

The user can then select an item or items from the vending machine, which may be by the same manner as if cash or a credit/debit card were inserted for payment. If the selection is not more than the transferred amount or credit, the selected item or items are dispensed to the user at step 614.

In other embodiments, the user may receive items in addition to what was selected for purchase. Such items may include incentives, such as coupons, special offers, etc. The incentives can be specifically dispensed for the user or for the purchase. For example, the network or payment provider may have information about the user from the communication, such as previous purchases, frequency of purchases, types of purchases, amount of purchases, etc. The payment provider may then access that information, along with any other data, such as from the merchant or other merchants, to determine a coupon or offer to provide the user that may promote a future purchase by the user from the selected merchant. The payment provider may also select a coupon or offer based simply on the purchase made by the user. For example, if the user bought cookies, the user may receive a coupon or credit for ten cents off a soft drink purchase. That coupon can be inserted into the machine or the credit may reside in the machine for the user to use.

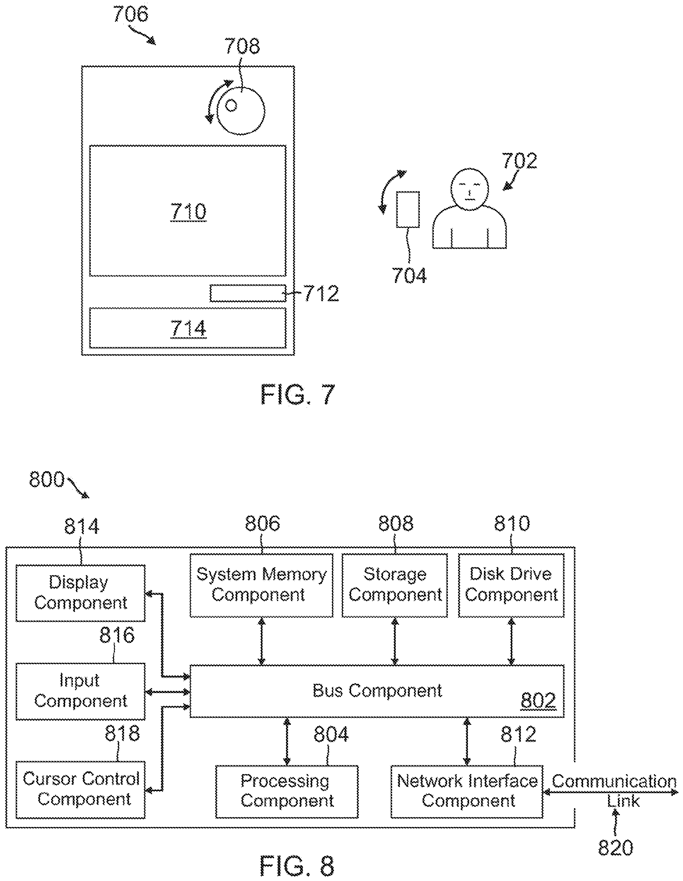

Fig. 7 shows one example of how a shake and transfer process can be used to purchase items from an unattended merchant according to one embodiment which is not part of the claimed invention. A user 702 with a mobile device 704, once in close proximity to a vending machine 706, shakes mobile device 704 (as shown by the arrows). Mobile device 704 can be a phone with an accelerometer or other motion-sensing element, such that when device 704 is shaken, the motion is detected and a signal is sent to a network. At approximately the same time, user 702 moves a movable feature on vending machine 706, such as a rotary dial 708, as shown by the arrows. A motion-sensing element detects this movement, causing a signal to be sent to the network. Both signals are processed by the network, as discussed above, to determine whether the two devices intended a communication. As discussed above, in other embodiments, user 702 does not need to move anything on vending machine 706 to initiate the purchase. If the network establishes the intended communication, user 702 can enter or select an amount with mobile device 704 to be transferred to vending machine 706 or its associated merchant. Vending machine 706 recognizes this transfer, which can be viewed equivalently as the user depositing cash into the vending machine.

User 702 then selects an item, such as via a display 710 that may include buttons for selection. If the selected item is not more than the amount transferred by user 702, the item is provided to the user, such as through a chute or tray 714. User 702 may also be provided a coupon or voucher through a slot 712 in vending machine 706, based on either the user information and/or the purchase. As a result, user 702 experiences a more unique buying process and may receive an additional benefit, such as a coupon, voucher or credit.

Fig. 8 is a block diagram of a computer system 800 according to one embodiment, which may be suitable for implementing embodiments of various aspects of this disclosure, including, for example, device 105, 110, 120, and/or 704. In various implementations of various embodiments, the devices may comprise a personal computing device, such as a personal computer, laptop, PDA, cellular phone, other personal computing or communications devices, or a network computing device, such as one or more servers, using computer system 800.

In one embodiment, computer system 800 may include a bus 802 or other communication mechanism for communicating information, which interconnects subsystems and components, such as a processing component 804 (e.g., processor, micro-controller, digital signal processor (DSP), etc.), a system memory component 806 (e.g., RAM), a static storage component 808 (e.g., ROM), a disk drive component 810 (e.g., magnetic or optical), a network interface component 812 (e.g., modem or Ethernet card), a display component 814 (e.g., CRT or LCD), an input component 816 (e.g., keyboard or keypad), and/or a cursor control component 818 (e.g., mouse or trackball). In one embodiment, disk drive component 810 may comprise a database having one or more disk drive components.

Computer system 800 may perform specific operations by processor 804 executing one or more sequences of one or more instructions contained in system memory component 806, according to steps described above. Such instructions may be read into system memory component 806 from another computer readable medium, such as static storage component 808 or disk drive component 810. In other embodiments, hard-wired circuitry may be used in place of or in combination with software instructions to implement the invention.

Logic may be encoded in a computer readable medium, which may refer to any medium that participates in providing instructions to processor 804 for execution. Such a medium may take many forms, including but not limited to, non-volatile media, volatile media, and transmission media. In various implementations, non-volatile media includes optical or magnetic disks, such as disk drive component 810, volatile media includes dynamic memory, such as system memory component 806, and transmission media includes coaxial cables, copper wire, and fiber optics, including wires that comprise bus 802. In one example, transmission media may take the form of acoustic or light waves, such as those generated during radio wave and infrared data communications.

Some common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, carrier wave, or any other medium from which a computer is adapted to read.

In various example embodiments, execution of instruction sequences for practicing embodiments of the invention may be performed by computer system 800. In various other embodiments, a plurality of computer systems 400 coupled by communication link 820 (e.g., LAN, WLAN, PTSN, or various other wired or wireless networks) may perform instruction sequences to practice the invention in coordination with one another.

Computer system 800 may transmit and receive messages, data, information and instructions, including one or more programs (i.e., application code) through communication link 820 and communication interface 812. Received program code may be executed by processor 804 as received and/or stored in disk drive component 810 or some other non-volatile storage component for execution.

Where applicable, various embodiments provided by the present disclosure may be implemented using hardware, software, or combinations of hardware and software. Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software, in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

The foregoing disclosure is not intended to limit the present invention to the precise forms or particular fields of use disclosed. It is contemplated that various alternate embodiments and/or modifications to the present invention, whether explicitly described or implied herein, are possible within the scope of the invention as claimed. Furthermore, with the shake and transfer process, only one device may need to be shaken in the embodiments of Figs. 4 and 5 to establish the connection between two devices. Also, a merchant or merchant device may be any entity or device that can transfer or distribute something of value.

Having thus described embodiments of the invention, persons of ordinary skill in the art will recognize that changes may be made in form and detail without departing from the scope of the invention. Thus, the invention is limited only by the claims.

## Claims

1. A method of making a wireless transaction, comprising:
establishing a near field communication (NFC) link between a consumer device and a merchant device;
transferring funds (402) from a consumer account to a merchant account or to another consumer account using the NFC link for a purchase of a downloadable item;
determining by a server, based on a shake of both the consumer device and the merchant device occurring within a predetermined distance and time period of each other, that another direct wireless communication link (410) between the consumer device and the merchant device can be established;
establishing the other communication link between the two devices, based on the determination; and
downloading the downloadable item (412) from the merchant device to the consumer device using the established other communication link.

2. The method of claim 1, wherein the other communication link has a transfer speed of greater than 424kbit/s.

3. The method of claim 1, wherein the downloadable item comprises a game, a video, or a movie.

4. The method of claim 1, wherein the downloadable item is selected after establishing the NFC link and prior to establishing the different communication link.

5. The method of claim 1, further comprising confirming a successful download to at least one of the consumer device and the merchant device.

6. The method of claim 1, further comprising receiving a confirmation from at least one of the consumer device and the merchant device prior to the downloading and after the establishing of the different communication link.

7. A method according to claim 1,
the method further comprising: receiving an indication of a selected data to be transferred (510) from the merchant device to the consumer device, wherein the selected data comprises a non-user contact, a photo, or a video from the merchant device.

8. The method of claim 7, wherein the selected data is chosen before the establishing.

9. The method of claim 7, further comprising confirming the selected data and parties for the transfer before the transferring.

10. The method of claim 7, further comprising confirming, to at least one of the first and second device, the selected data has been transferred successfully.

## Patentansprüche

1. Verfahren zum Durchführen einer drahtlosen Transaktion, das Folgendes beinhaltet:
Einrichten einer Nahfeldkommunikations-(NFC)-Verbindung zwischen einem Verbrauchergerät und einem Händlergerät;
Übertragen von Geldmitteln (402) von einem Verbraucherkonto auf ein Händlerkonto oder ein anderes Verbraucherkonto über die NFC-Verbindung zum Kaufen eines herunterladbaren Artikels;
Feststellen durch einen Server, auf der Basis davon, dass ein Shake des Verbrauchergeräts und des Händlergeräts innerhalb einer vorbestimmten Distanz und Zeitperiode voneinander erfolgt, dass eine andere direkte drahtlose Kommunikationsverbindung (410) zwischen dem Verbrauchergerät und dem Händlergerät aufgebaut werden kann;
Aufbauen der anderen Kommunikationsverbindung zwischen den beiden Geräten auf der Basis der Feststellung; und
Herunterladen des herunterladbaren Artikels (412) von dem Händlergerät auf das Verbrauchergerät über die aufgebaute andere Kommunikationsverbindung.

2. Verfahren nach Anspruch 1, wobei die andere Kommunikationsverbindung eine Übertragungsgeschwindigkeit von mehr als 424 kbit/s hat.

3. Verfahren nach Anspruch 1, wobei der herunterladbare Artikel ein Spiel, ein Video oder einen Film umfasst.

4. Verfahren nach Anspruch 1, wobei der herunterladbare Artikel nach dem Aufbauen der NFC-Verbindung und vor dem Aufbauen der anderen Kommunikationsverbindung ausgewählt wird.

5. Verfahren nach Anspruch 1, das ferner das Bestätigen eines erfolgreichen Herunterladens auf das Verbrauchergerät und/oder das Händlergerät beinhaltet.

6. Verfahren nach Anspruch 1, das ferner das Empfangen einer Bestätigung von dem Verbrauchergerät und/oder dem Händlergerät vor dem Herunterladen und nach dem Aufbauen der anderen Kommunikationsverbindung beinhaltet.

7. Verfahren nach Anspruch 1,
wobei das Verfahren ferner Folgendes beinhaltet: Empfangen einer Anzeige von gewählten Daten, die von dem Händlergerät auf das Verbrauchergerät übertragen (510) werden sollen, wobei die gewählten Daten einen Nichtbenutzer-Kontakt, ein Foto oder ein Video von dem Händlergerät umfassen.

8. Verfahren nach Anspruch 7, wobei die gewählten Daten vor dem Aufbauen gewählt werden.

9. Verfahren nach Anspruch 7, das ferner das Bestätigen der gewählten Daten und Parteien für die Übertragung vor dem Übertragen beinhaltet.

10. Verfahren nach Anspruch 7, das ferner das Bestätigen, dem ersten und/oder dem zweiten Gerät, beinhaltet, dass die gewählten Daten erfolgreich übertragen wurden.

## Revendications

1. Procédé de réalisation d'une transaction sans fil, comprenant :
un établissement d'une liaison de communication en champ proche (NFC) entre un dispositif client et un dispositif commerçant ;
un transfert de fonds (402) à partir d'un compte client vers un compte commerçant ou vers un autre compte client en utilisant la liaison NFC pour un achat d'un article téléchargeable ;
une détermination par un serveur, sur la base d'une secousse à la fois du dispositif client et du dispositif commerçant se produisant à l'intérieur d'une distance et d'une période de temps prédéterminées l'un de l'autre, du fait qu'une autre liaison de communication sans fil directe (410) entre le dispositif client et le dispositif commerçant peut être établie ;
un établissement de l'autre liaison de communication entre les deux dispositifs, sur la base de la détermination ; et
un téléchargement de l'article téléchargeable (412) à partir du dispositif commerçant vers le dispositif client en utilisant l'autre liaison de communication établie.

2. Procédé selon la revendication 1, dans lequel l'autre liaison de communication présente une vitesse de transfert supérieure à 424 kbit/s.

3. Procédé selon la revendication 1, dans lequel l'article téléchargeable comprend un jeu, une vidéo, ou un film.

4. Procédé selon la revendication 1, dans lequel l'article téléchargeable est sélectionné après un établissement de la liaison NFC et avant un établissement de la liaison de communication différente.

5. Procédé selon la revendication 1, comprenant en outre une confirmation d'un téléchargement réussi vers au moins un du dispositif client et du dispositif commerçant.

6. Procédé selon la revendication 1, comprenant en outre une réception d'une confirmation à partir d'au moins un du dispositif client et du dispositif commerçant avant le téléchargement et après l'établissement de la liaison de communication différente.

7. Procédé selon la revendication 1,
le procédé comprenant en outre : une réception d'une indication de données sélectionnées pour être transférées (510) à partir du dispositif commerçant vers le dispositif client, dans lequel les données sélectionnées comprennent un contact de non-utilisateur, une photo, ou une vidéo à partir du dispositif commerçant.

8. Procédé selon la revendication 7, dans lequel les données sélectionnées sont choisies avant l'établissement.

9. Procédé selon la revendication 7, comprenant en outre une confirmation des données sélectionnées et des parties pour le transfert avant le transfert.

10. Procédé selon la revendication 7, comprenant en outre une confirmation, vers au moins un du premier et d'un second dispositif, du fait que les données sélectionnées ont été transférées avec succès.
